# EUROPEAN PATENT SPECIFICATION

(11) **EP 1 439 988 B1**
(45) Date of publication and mention of the grant of the patent: **24.10.2007**
(21) Application number: 02773638.8
(22) Date of filing: 30.09.2002
(51) Int. Cl.: B60R 21/20, B60R 21/16

(54) **SIDE IMPACT AIRBAG APPARATUS**
SEITENAUFPRALL-AIRBAGVORRICHTUNG
ENSEMBLE COUSSIN DE SECURITE GONFLABLE POUR CHOC LATERAL

(30) Priority: 30.10.2001 US 21470
(43) Date of publication of application: 28.07.2004
(73) Proprietor: KEY SAFETY SYSTEMS, INC., Sterling Heights, MI 48314 (US)
(72) Inventor: KALANDEK, Bruce, Dearborn, MI 48124 (US); WIPASURAMONTON, Pongdet, P., Rochester, MI 48307 (US); MACY, Phillip, J., Clarkston, MI 48348 (US); JAKOVSKI, Jovica, J., Warren, MI 48088 (US); OLSON, Mark, O., Farmington Hills, MI 48331 (US); HAGUE, Michael, A., Troy, MI 48098 (US); SALMO, Shakir , M., Sterling Heights, MI 48310 (US); MACLEAN, John, C., Brown City, MI 48416 (US)
(74) Representative: Gislon, Gabriele
(86) International application number: PCT/US2002/030876
(87) International publication number: WO 2003/037677

(56) References cited:
- EP-A- 0 955 213
- DE-A- 10 021 577
- JP-A- 6 227 340
- US-A- 5 588 672
- US-A- 5 924 723
- US-B1- 6 237 938
- US-B1- 6 273 458
- US-B1- 6 412 810
- US-B1- 6 454 296
- US-B2- 6 474 681

## Description

The present invention relates to side impact and rollover airbags.

A variety of side impact airbags have been proposed. One class of these airbags is stored proximate the roof rail of the vehicle in a compact, folded condition and when deployed, extends down, generally parallel to the side of the vehicle, the door of the vehicle, or the window area of the vehicle to provide a cushioned barrier between a vehicle occupant and this side of the vehicle. The prior art shows these curtain type airbags spanning, one, two, and perhaps three pillars between the A and D pillars of the vehicle. The airbag is inflated by a source of inflation gas such as an inflator. The inflator can be positioned at any convenient location within the vehicle, such as adjacent to the A, B, C, and/or D pillar or in the roof rail. The inflator can be covered by trim or molding and can be connected directly to the airbag or through a fill tube or passage.

The forces generated during a side impact crash are generally horizontal and the protected vehicle occupant moves laterally and rolls slightly into the airbag and about the vehicle. Consequently, any reaction forces on the airbag tend to be generally horizontal in nature. However, in the case of a rollover crash, there may be situations in which the vehicle occupant reacts against the airbag in a manner that would tend to displace the airbag from its deployed condition toward the roof rail. To prevent this upward motion, the prior art has devised means to lock a portion or portions of the inflated curtain, side impact airbag in place. One of the detriments of those systems that lock or latch the airbags in place is that after the crash it is more difficult for the vehicle occupant to lift the now-deflated curtain airbag and exit the vehicle.

EP 0955213 discloses a side impact airbag apparatus according to the preamble of claim1, wherein the airbag has a slide element movable on a rod, that is provided in its lower region with a locking means to prevent the slide element returning upwards after the airbag has inflated.

US-A-6237938 discloses an apparatus for helping deployment of a CAB wherein the Curtain Air Bag has a tether secured to the A pillar and an element secured to a guide or track secured to the C pillar of the vehicle. With the downwards movement of the CAB the element moves along the track and a latch is provided to block the sliding element from returning to the initial position. US-A-5588672 discloses a curtain airbag provided with two securing points in the upper window area and a third securing point movable within a track secured to the B pillar near the rear edge of the window area. In this document, too, it is taught to block the securing point at the end of its travel along the track to hold the curtain in a fully deployed position.

The present invention provides an improved airbag that seeks a preferred orientation during deployment that provides a self-centering or self-inhibiting mechanism that resists the tendency of the airbag to be moved by the vehicle occupant, toward the roof rail and subsequent to the crash a vehicle occupant can easily move the airbag out of the way.

### Brief Description of the Drawings

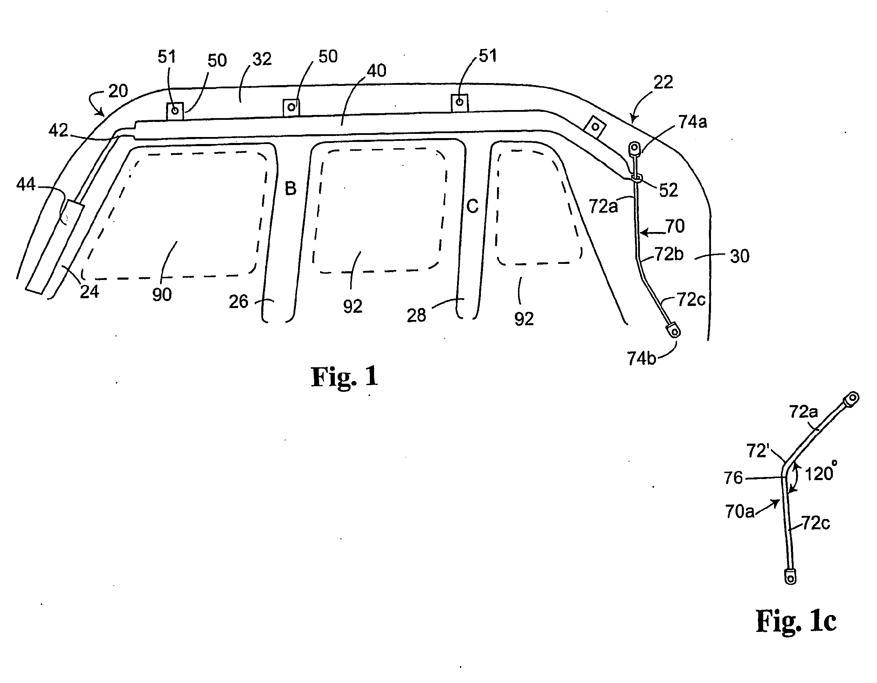

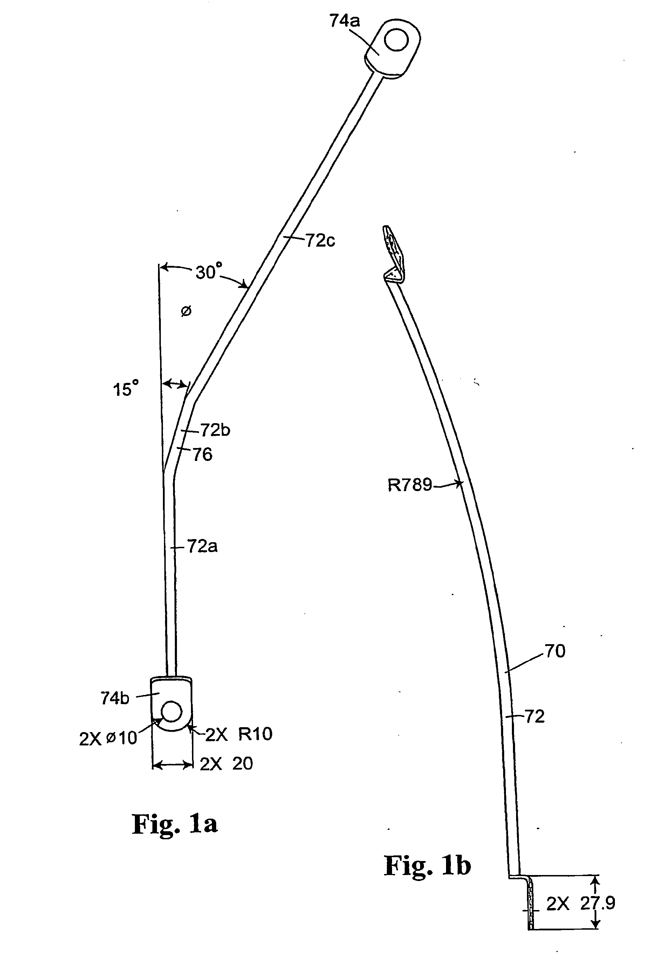

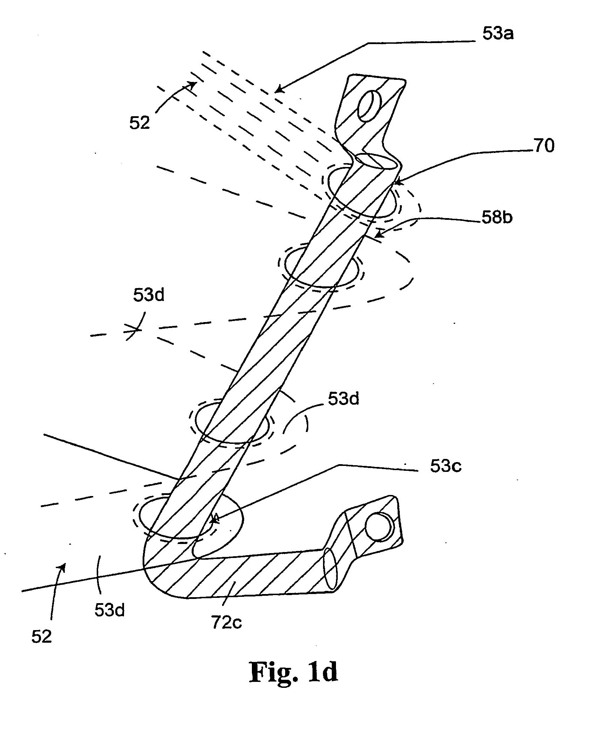

FIG. 1 shows a side impact rollover curtain airbag system with an anchor bar and the airbag in a stowed position.
FIG. 1 a is an enlarged plan view of an anchor bar.
FIG. 1b is a side view of an anchor bar.
FIGs. 1c and 1d show other embodiments of the anchor bar.
FIG. 2 shows the system of FIG. 1 with the airbag in a deployed position.
FIG. 2a shows an alternate embodiment of the anchor bar.
FIG. 3 shows an alternate embodiment of the anchor bar.
FIG. 4 shows an alternate embodiment of the anchor bar.
FIGS. 5 and 6 show another embodiment of the anchor bar.
FIGs. 7 and 8 show an embodiment of the invention.

### Detailed Description of the Invention

FIG. 1 illustrates a side impact airbag apparatus 20, that may provide rollover protection, for use in a vehicle 22 having two or more support pillars, for example pillars A, B, and/or C and D pillars 24, 26, 28 and 30. The vehicle 22 includes a roof rail 32 and other elements that are not illustrated.

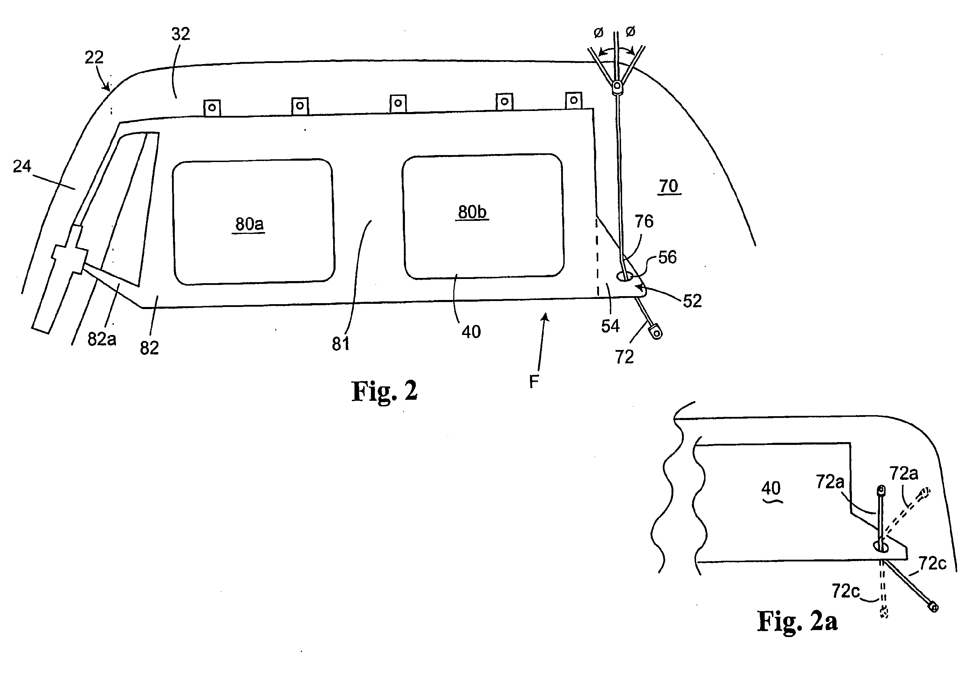

The side impact airbag apparatus 20 includes a side curtain/rollover airbag 40, which has one or more inflatable and connected chambers, as shown in FIG. 2, and an inlet 42 connected to a source of inflation gas such as an airbag inflator 44. The inflator 44 is shown mounted on the A-pillar 24, however, this inflator 44 can be located at a convenient location close to or remote from the airbag 40. The airbag includes a plurality of anchors 50. In FIG. 1 the airbag includes a plurality of reinforced openings, which permit the airbag to be mounted proximate the roof rail 32. The reinforced openings can, for example, be formed by multi-layers of fabric or by metal or plastic rings. For example, the anchors 50 can receive a co-acting set of vehicle anchors 51, which may comprise hooks extending from the vehicle or alternatively, threaded fasteners, which extend through each opening 50, to mount the airbag 40 to the vehicle 22. The airbag 40 includes a movable anchor 52, which is formed in a non-inflatable section of fabric 54.

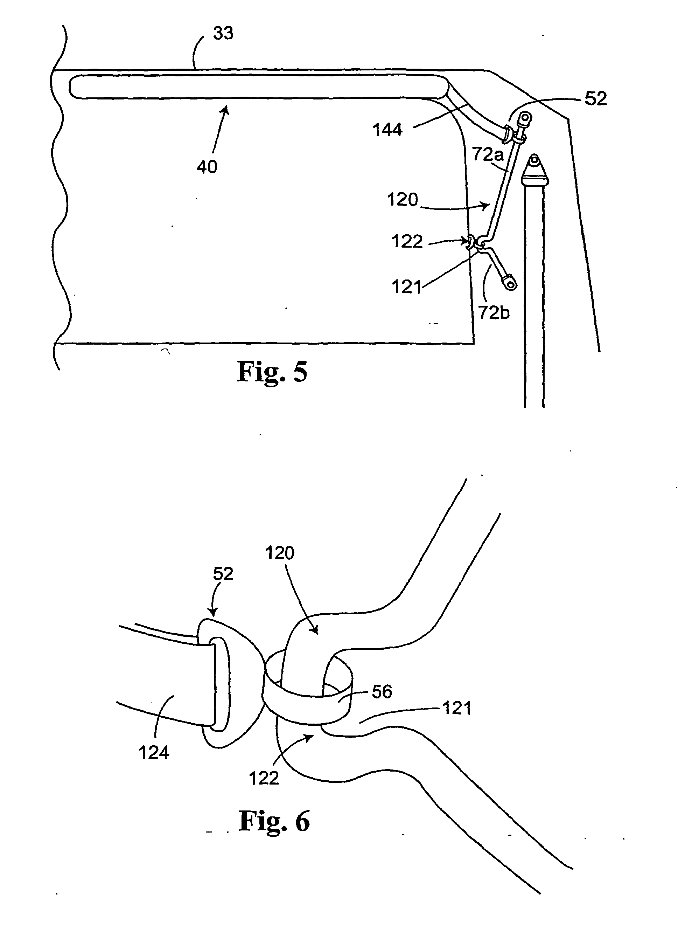

In FIG. 2 the movable anchor is formed by a triangular section of fabric and resembles a sail and which functions as a tether that is external to the inflatable portions of the airbag. The movable anchor can be part of an external tether formed by, for example, a length of seat belt webbing. The movable anchor includes an opening, as shown in FIG. 2, in the fabric 54 or by a washer or a strap 56 attached thereto, as shown in FIGs. 1 and 6. The side impact airbag apparatus 20 further includes a vehicle mounted external tether guide 70, which also acts as a force-directing mounting mechanism, which in one embodiment includes a bent rod 72 having the facility to be mounted at either of its ends. For example, the tether guide 70 may include mounting openings 74a, 74 b, which can be used to secure the tether guide to the vehicle by fasteners such as threaded bolts. The rod 72 extends through opening or washer 56 such that the moving anchor can slide on the bar 72. The system mechanisms; that is, the inflator, the airbag and the tether guide, prior to the crash are hidden from view such as by appropriate automotive trim panels or fascia at or near the adjacent pillars and roof rail.

FiGs. 1a and 1b show greater details of the external tether guide 70. The rod 72 includes three sections 72a, 72b, 72c as shown in FIG. 1a. A first section 72a is generally mounted at an angle relative to the vehicle structure. In many instances the first section 72a can be mounted in a generally vertical orientation (of about +/-15 degrees) which in some cases will be generally parallel to the major part of the rearmost pillar (which is formed by sheet metal). Two sections 72a, 72c of the rod 72 angle away from the third section 72b, which is mounted at or near the level of the window sill.

FIG. 2 shows the airbag in a deployed condition and shows other features of the side impact airbag apparatus 20. FIG. 2 shows the plurality of inflatable chambers 80a, 80b of the airbag, which are separated by a non-inflated section 81. The lower, forward portion of the airbag 82 is connected to an adjacent portion of the vehicle, or to the inflator, through a rotatably mounted, or bendable, tether 82a in a known manner. As the airbag is inflated, it breaks through its protective housing (not shown) and moves downwardly parallel to the vehicle side, which as mentioned may include windows 90, 92, solid portions of the vehicle, or pillars, the vehicle doors, etc. As the airbag inflates, it causes the movable anchor 52 to slide down the rod 72.

The apex 76 of the rod 72 is positioned such that when the airbag is fully inflated the movable anchor 52, or the opening or washer 56, is located at the apex. As is known in the art, as the airbag inflates it will tend to become shorter in the fore-aft direction. This shrinkage or foreshortening of the airbag will generate a force that extends from the tether 84 to the rod 72. This force, as it acts through the movable anchor 52 and reacts against the rod 72, will tend to self center the movable anchor 52 at or near the apex 76. As long as the airbag remains inflated, any tendency to urge, push or other move the airbag upwardly, as indicated by force F, is now resisted because of the opposing reaction forces contributed by the bent rod. More particularly, if the airbag is lifted slightly into sections 72a or pulled down to section 72c of the rod, the reaction force acting between the opening or washer 56 and the rod 72 is resolved into a self-centering component of force, which tends to urge the movable anchor 52 toward the apex 72a.

FIG. 1 c shows a further embodiment of the anchor bar or rod. This figure shows an alternate tether guide or force-directing member 70a, which comprises a bent rod 72', which has a single bend at its apex 76. in FIG. 2a, a leg 72c is mounted generally vertically relative to the vehicle with a leg 72a angling therefrom. In this embodiment the leg 72b is of zero length.

FIG. 1d shows another embodiment of the external tether guide. In this embodiment the leg 72c of rod 72' extends horizontally in its mounted in-vehicle orientation. FIG. 1d also shows the progression of movement of tether or movable anchor 52 from a stowed position 53a to intermediate positions 53b, 53c to an active position 53d at the apex of the rod. The movable anchor in the other embodiments will move similarly

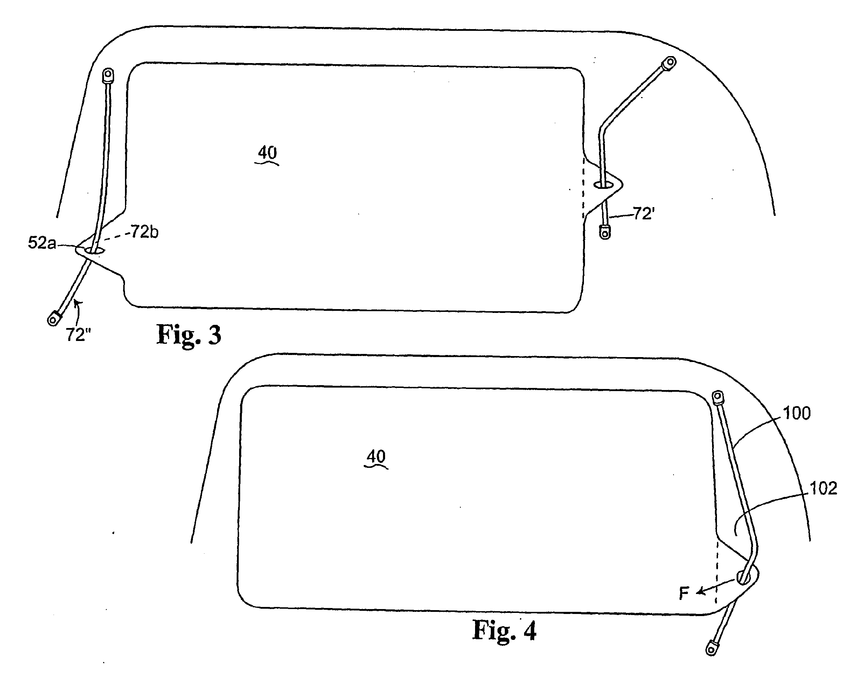

FIG. 3 shows an alternative embodiment of the anchor bar or rod, in which the front tether 84 is replaced by a the combination of second bent rod 72" received within another movable anchor 52a, which is initially positioned near the roof rail and covered by trim. As the airbag inflates the movable anchor 52a moves down its cooperating rod 72".

FIG. 4 shows an alternative embodiment of the anchor rod. The force-directing mechanism or tether guide 70 has been replaced by a bent rod 100, which is oppositely oriented relative to the direction of the rods 72 in the earlier figures. As the airbag inflates the movable anchor 52 is pulled down the bar below the apex 102. As the airbag continues to inflate, the foreshortening of the airbag will tend to cause the sliding anchor point to try to slide further down the bar 100, as indicated by force F, thereby resisting any force tending to move the airbag upwardly.

After the crash, that is after any of the illustrated airbags have been sufficiently deflated, the vehicle occupant can simply lift the airbag upwardly so that he may easily egress from the vehicle.

FIGs. 5 and 6 show another embodiment of the anchor rod or bar. FIG. 5 shows the layout of the airbag 40 in relation to another force-directing member such as bar 120. The bar 120 is similar to many of the bars described above but includes a discontinuity or cup 122 at its apex 121. The apex and discontinuity can be right or left-hand facing. The movable airbag anchor 52 is formed by a length of webbing 124 such as seat belt webbing sewn to an uninflated portion of the airbag 40. The webbing 124 can be referred to as a tether. A ring or washer 56 is secured to the tether. The angle of bar 120 will cause the ring 56 to slide upon bar 120. Continued movement of the ring will place the ring within the discontinuity or cup 122, which provides for a more positive stoppage or temporary lock or latch. Subsequent to the crash, the ring is easily slid upward. During deployment of the airbag should the ring slide past the apex, the angle of the bar will insure that the ring returns to the area surrounding the apex of the bar.

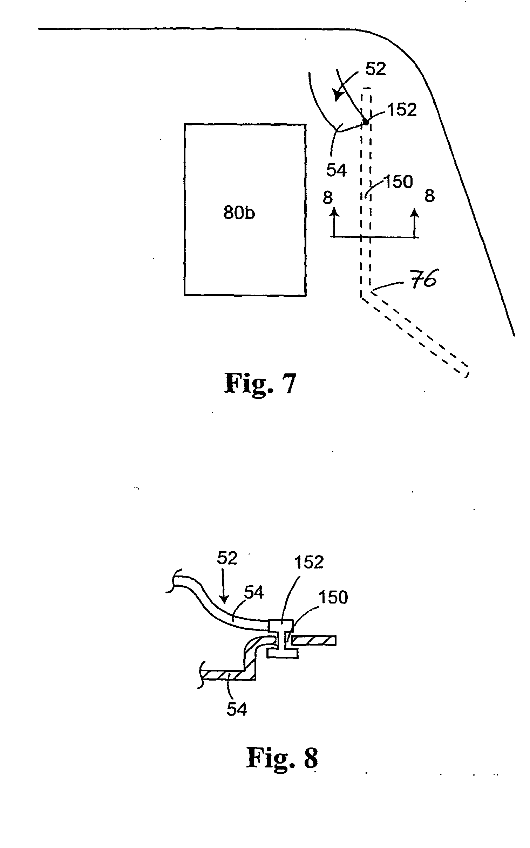

The various rods described in essence define a preferred path for the movable anchor 52. This path or trajectory can be formed in ways other than using a separate rod or bar. For example, FIGs. 7 and 8 show an embodiment of the invention in which the trajectory of any of the above rods is formed integral to the sheet metal forming the various pillars. The movable anchor 52 in this case can be fashioned with a sliding fastener 152. which slides through the shaped channel 150 formed in the sheet metal of the pillar. This embodiment provides the same functionality but perhaps at cost savings. Additionally, the channel can also be formed to include any of the discontinuities 122.

## Claims

1. A side impact airbag apparatus (20) comprising:
an inflatable airbag (40) adapted to be installed a vehicle in a stowed condition proximate a roof rail (32) of the vehicle and when the airbag is inflated it expands from the stowed condition to a deployed condition generally in front of an adjacent side of the vehicle;
the airbag (40) including a set of first airbag anchors (50) connected to a set of first vehicle anchors (51) within the vehicle, the airbag including at least one movable airbag anchor (152) at an end of the airbag; and
a force-directing member (150) mounted within the vehicle and is adapted to slidingly receive and support the movable anchor, wherein upon inflation of the airbag (40), the airbag moves to the deployed condition causing the movable anchor to slide down the force-directing member so that upon inflation of the airbag the movable anchor is self located at or near a center of the force-directing member resisting any tendency of the curtain to move or be moved upwardly,
**characterised in that** the force-directing member (150) includes a shaped channel (150) formed in an adjacent vehicle pillar (24, 26, 28, 30).

2. A side impact airbag apparatus (20) as defined in Claim 1 wherein the force-directing member (150) has an apex (76) that tends to cause the movable airbag anchor (152) to self-center.

3. A side impact airbag apparatus (20) as defined in Claim 2 wherein the force-directing member (150) includes a positive locking feature (122).

4. A side impact airbag apparatus (20) as defined in Claim 1 wherein the force-directing member (150) includes an apex (76) directed away from the airbag (40).

## Patentansprüche

1. Seitenaufprall-Airbagvorrichtung (20), die folgendes umfasst:
einen aufblasbaren Airbag (40), dafür eingerichtet, in einem Fahrzeug in einem verstauten Zustand nahe eines Dachbalkens (32) des Fahrzeugs eingebaut zu werden, und wenn der Airbag aufgeblasen wird, dehnt er sich allgemein vor einer benachbarten Seite des Fahrzeugs von dem verstauten Zustand zu einem entfalteten Zustand aus,
wobei der Airbag (40) einen Satz von ersten Airbagankern (50) einschließt, die mit einem Satz von ersten Fahrzeugankern (51) innerhalb des Fahrzeugs verbunden sind,
wobei der Airbag wenigstens einen beweglichen Airbaganker (152) an einem Ende des Airbags einschließt, und
ein Kraftlenkungselement (150), das innerhalb des Fahrzeugs angebracht und dafür eingerichtet ist, den beweglichen Anker gleitend aufzunehmen und zu tragen, wobei sich der Airbag auf ein Aufblasen des Airbags (40) zu dem entfalteten Zustand bewegt, was bewirkt, dass der bewegliche Anker das Kraftlenkungselement hinab gleitet, so dass der bewegliche Anker auf ein Aufblasen des Airbags selbsttätig bei oder nahe der Mitte des Kraftlenkungselements positioniert wird und jeder Neigung des Vorhangs widersteht, nach oben sich zu bewegen oder bewegt zu werden,
**dadurch gekennzeichnet, dass** das Kraftlenkungselement (150) einen geformten Kanal (150) einschließt, der in einer benachbarten Fahrzeugsäule (24, 26, 28, 30) geformt ist.

2. Seitenaufprall-Airbagvorrichtung (20) nach Anspruch 1, wobei das Kraftlenkungselement (150) derart eingerichtet ist, dass der Scheitelpunkt (76) dazu neigt, zu bewirken, dass sich der bewegliche Airbaganker (152) selbsttätig zentriert.

3. Seitenaufprall-Airbagvorrichtung (20) nach Anspruch 2, wobei das Kraftlenkungselement (150) ein zwangsschlüssiges Merkmal (122) einschließt.

4. Seitenaufprall-Airbagvorrichtung (20) nach Anspruch 1, wobei das Kraftlenkungselement (150) einen Scheitelpunkt (76) einschließt, der von dem Airbag (40) weg gerichtet ist.

## Revendications

1. Dispositif de coussin d'air de protection contre un impact latéral (20), comprenant :
un coussin d'air gonflable (40), destiné à être installé dans un véhicule dans un état de rangement près d'un rail de toit (32) du véhicule, le coussin d'air se dilatant lors de son gonflement de l'état de rangement vers un état déployé, généralement devant un côté adjacent du véhicule ;
le coussin d'air (40) englobant un groupe de premiers éléments d'ancrage du coussin d'air (50), connecté à un groupe de premiers éléments d'ancrage du véhicule (51) dans le véhicule, le coussin d'air englobant au moins un élément d'ancrage mobile du coussin d'air (152) au niveau d'une extrémité du coussin d'air ; et
un élément de direction de force (150) monté dans le véhicule et destiné à recevoir par glissement et à supporter l'élément d'ancrage mobile, le coussin d'air (40) se déplaçant lors de son gonflement vers l'état déployé, entraînant le glissement de l'élément d'ancrage mobile le long de l'élément de direction de force, de sorte que lors du gonflement du coussin d'air, l'élément d'ancrage mobile est positionné automatiquement au niveau d'un centre de l'élément de direction de force ou près de celui-ci, résistant à une quelconque tendance du rideau à se déplacer ou à être déplacé vers le haut,
**caractérisé en ce que** l'élément de direction de force (150) englobe un canal façonné (150) formé dans un montant adjacent du véhicule (24, 26, 28, 30).

2. Dispositif de coussin d'air de protection contre un impact latéral (20) selon la revendication 1, dans lequel l'élément de direction de force (150) est tel que le sommet (76) tend à entraîner le centrage automatique de l'élément d'ancrage mobile du coussin d'air (152).

3. Dispositif de coussin d'air de protection contre un impact latéral (20) selon la revendication 2, dans lequel l'élément de direction de force (150) englobe une structure de verrouillage positif (122).

4. Dispositif de coussin d'air de protection contre un impact latéral (20) selon la revendication 1, dans lequel l'élément de direction de force (150) englobe un sommet (76) dirigé à l'écart du coussin d'air (40).
